# EUROPEAN PATENT APPLICATION

(11) **EP 4 636 295 A1**
(43) Date of publication of application: **22.10.2025**
(21) Application number: 24315197.4
(22) Date of filing: 19.04.2024
(51) Int. Cl.: F16L 55/11, F16L 55/132, F16L 55/136

(54) **INTERNAL CLAMPING BLOCKING PLUG**

(71) Applicant: ASCO, L.P., Florham Park, NJ 07932 (US)
(72) Inventor: Hessling, Terry, Morrice, MI 48857 (US); Brown, Michael, Fenton, MI 48430 (US); Faragó, Dániel, 3528 Miskolc (HU); Champouillon, Christophe, 74250 Peillonnex (FR); Paulus, Heinz, 31180 Giesen (DE)
(74) Representative: Kilburn & Strode LLP

(57) **Abstract**

An apparatus for plugging a flow path includes an end cap (200) having a head and a neck, a seal (300) disposed about the neck to selectively sealingly engage an internal surface of the flow path, a first wedge (400) having a first sliding surface aligned at a first angle with respect to a longitudinal axis, a second wedge (500) having a second sliding surface configured to engage the first sliding surface, and an actuator (600) disposed through the seal, the first wedge, and the second wedge. The first wedge has a first end configured to engage the seal and a longitudinally opposite second end with the first sliding surface thereon. The actuator (600) can be threadably coupled to the end cap (200). The actuator and the end cap compress the sea and the first wedge between the end cap and the second wedge to plug the flow path.

## Description

### BACKGROUND OF THE INVENTION

Field of the Invention. The present disclosure relates generally to plugs for blocking or restricting flow through a flow path and more specifically relates to plugs for pneumatic control systems.

### Description of the Related Art.

Situations exist where there is a need to seal or plug a flow path, such as in a valve manifold system or other device used to move, distribute, or redirect flow (of liquid, vacuum, compressed air, or another media). The reasons for adding a seal or plug in a flow path can include blocking the flow path, redirecting media to an intersecting flow path, creating differential pressure zones, avoiding leaking flow paths and/or other reasons, whether alone or in combination.

Some conventional sealing plugs rely on expansion of a metal sleeve/clip/ring or an elastomeric seal for holding the plug and sealing the flow path. High holding power can be important to keep the plug from moving and/or leaking. Plugs with an expanding metal sleeve/clip/ring can damage the flow path and often have a fixed sealing element that must be forced into the flow path, where the sealing element can become damaged during installation. Torquing a sealing plug of the type where only an elastomeric seal is used for holding the plug in place can also be difficult, with only the compressed sealing element acting to resist rotation of the entire plug. In addition, most of the existing sealing plug solutions are designed to be suitable for round- or bore-shaped flow paths only. Due to optimization of flow through volumes, flow paths of other shapes can offer significantly higher through-put rates of the fluid and a need exists in the art for plugs capable of plugging non-cylindrical flow paths.

### SUMMARY OF THE INVENTION

Applicant has created new and useful devices, systems and methods for flow blocking plugs, such as those used in pneumatic control systems. Embodiments of the disclosure can be utilized for securely and removably plugging a flow path, including flow paths having limited access thereto, and with minimal or no damage to the flow path. Embodiments of the disclosure can be utilized for both circular and non-circular flow paths.

In at least one embodiment, an apparatus for plugging a flow path can include an end cap having a head and a neck, a seal disposed about the neck and configured to selectively sealingly engage an internal surface of the flow path, a first wedge having a first sliding surface aligned at a first angle with respect to a longitudinal axis of the apparatus, a second wedge having a second sliding surface configured to engage the first sliding surface, an actuator disposed at least partially through the seal, the first wedge, and the second wedge, or any combination thereof. In at least one embodiment, the first wedge can have a first end configured to engage the seal and a longitudinally opposite second end. In at least one embodiment, the first sliding surface can be on the second end of the first wedge. In at least one embodiment, the second sliding surface can be aligned at a second angle with respect to the longitudinal axis. In at least one embodiment, the actuator can have a first end rotatably coupled to the end cap. In at least one embodiment, the first end of the actuator can be threadably coupled to the end cap. In at least one embodiment, the actuator and the end cap can compress the seal and/or the first wedge between the end cap and the second wedge. In at least one embodiment, the first wedge and/or the second wedge can slide outwardly, with respect to one another, along the first and second sliding surfaces, as the seal and the first wedge are compressed, for engaging the internal surface of the flow path.

In at least one embodiment, the end cap can include a threaded opening in the neck. In at least one embodiment, the head of the end cap can be closed. In at least one embodiment, the end cap can have a threaded opening therein, such as in a proximal surface thereof disposed adjacent to the first wedge. In at least one embodiment, the threaded opening need not extend through the end cap. In at least one embodiment, the opening need not be threaded, and can be configured for coupling with an actuator in one or more other manners.

In at least one embodiment, the end cap can have a non-cylindrical outer surface configured to resist rotation within the flow path by engaging the internal surface of the flow path. In at least one embodiment, the end cap can have a cylindrical outer surface. In at least one embodiment, the outer surface of the end cap can have a recess configured to resist rotation of the end cap. In at least one embodiment, the head of the end cap can couple with a tool inserted through an intersecting path that laterally intersects the flow path to resist rotation of the end cap. In at least one embodiment, a tool can be used with the apparatus to resist rotation of the end cap. In at least one embodiment, the tool can be placed through an intersecting path, the intersecting path intersecting the flow path at an angle, to engage the recess and resist rotation of the end cap.

In at least one embodiment, the first wedge can have a non-cylindrical outer surface, a non-cylindrical inner surface, and a wall therebetween. In at least one embodiment, at least a portion of the end cap can slideably couple with the inner surface of the first wedge. In at least one embodiment, at least a portion of the neck of the end cap can slideably couple with the inner surface of the first wedge. In at least one embodiment, the wall can have a constant thickness about its periphery.

In at least one embodiment, the first angle and the second angle can be equal. In at least one embodiment, the first angle and the second angle can be different from one another. In at least one embodiment, the second wedge can include a thru hole parallel to a longitudinal axis of the apparatus. In at least one embodiment, the thru hole can have an oblong cross-sectional shape. In at least one embodiment, the second wedge can have a non-cylindrical outer surface.

In at least one embodiment, any or each of the first wedge, the second wedge, and the seal can be of a non-cylindrical cross-sectional shape in a direction or plane perpendicular to the longitudinal axis of the apparatus. In at least one embodiment, the seal can be disposed longitudinally between a shoulder of the end cap and a bottom surface of the first wedge. In at least one embodiment, one or both of the first and second wedges can have a smooth outer surface configured to engage the internal surface of the flow path. In at least one embodiment, the neck of the end cap can have a boss configured to align the first wedge relative to the end cap. In at least one embodiment, the actuator can have a head configured to force the second wedge towards the end cap. In at least one embodiment, the first and second wedges can engage the internal surface of the flow path laterally to longitudinally fix the apparatus in place relative to the flow path. In at least one embodiment, the seal can deform radially outwardly to sealingly engage the internal surface of the flow path. In at least one embodiment, the first wedge and/or the second wedge can be tubular. In at least one embodiment, the second wedge can have an irregular thru hole there through. In at least one embodiment, the second wedge can have a top surface configured to couple with the actuator. *

In at least one embodiment, an apparatus for plugging a non-cylindrical flow path can include an end cap having a first non-cylindrical outer surface, a head, and a neck, a seal disposed about the neck and configured to selectively sealingly engage an internal surface of the flow path, a first wedge having a first sliding surface aligned at a first angle with respect to a longitudinal axis of the apparatus, a second wedge having a second sliding surface configured to engage the first sliding surface, an actuator disposed at least partially through the seal, the first wedge, and the second wedge, or any combination thereof. In at least one embodiment, the first wedge can have a first end configured to engage the seal and a longitudinally opposite second end. In at least one embodiment, first sliding surface can be on the second end of the first wedge. In at least one embodiment, the second sliding surface can be aligned at a second angle with respect to the longitudinal axis. In at least one embodiment, the actuator can have a first end rotatably coupled to the end cap. In at least one embodiment, the actuator and the end cap can compress the seal and/or the first wedge between the end cap and the second wedge. In at least one embodiment, the first non-cylindrical outer surface of the end cap can resist rotation within the flow path, as the actuator rotates with respect to the end cap, such as by engaging the internal surface of the flow path. In at least one embodiment, the first wedge and/or the second wedge can slide laterally outwardly, with respect to one another, along the first and second sliding surfaces, as the actuator rotates with respect to the end cap and the seal and/or the first wedge are compressed, such as to engage the internal surface of the flow path.

In at least one embodiment, the end cap can include a threaded opening penetrating a proximal surface, the proximal surface being adjacent to the first wedge. In at least one embodiment, the threaded opening need not extend through the end cap.

In at least one embodiment, the first wedge can have a non-cylindrical outer surface, a non-cylindrical inner surface, and a wall therebetween. In at least one embodiment, at least a portion of the end cap can slideably couple with the inner surface of the first wedge. In at least one embodiment, the wall can have a constant thickness about its periphery. In at least one embodiment, the first angle and the second angle can be equal. In at least one embodiment, the first angle and the second angle can be different from one another. In at least one embodiment, the second wedge can have a thru hole parallel with the longitudinal axis. In at least one embodiment, the thru hole can have an oblong cross-sectional area perpendicular to the longitudinal axis. In at least one embodiment, the second wedge can have a non-cylindrical outer surface.

In at least one embodiment, an apparatus for plugging a non-cylindrical flow path can include an end cap having a first non-cylindrical outer surface, a head, and a neck, a seal disposed about the neck and configured to selectively sealingly engage an internal surface of the flow path, a first wedge having a second non-cylindrical outer surface and a first sliding surface aligned at a first angle with respect to a longitudinal axis of the apparatus, a second wedge having a third non-cylindrical outer surface and a second sliding surface configured to engage the first sliding surface, a threaded fastener disposed at least partially through the seal, the first wedge, and the second wedge, or any combination thereof. In at least one embodiment, the first wedge can have a first end configured to engage the seal. In at least one embodiment, the first wedge can have a longitudinally opposite second end. In at least one embodiment, the first sliding surface can be on the second end of the first wedge. In at least one embodiment, the second sliding surface can be aligned at a second angle with respect to the longitudinal axis.

In at least one embodiment, the threaded fastener can have a first end threadably coupled to the end cap. In at least one embodiment, the threaded fastener and the end cap can compress the seal and/or the first wedge between the end cap and the second wedge. In at least one embodiment, the first non-cylindrical outer surface of the end cap can resist rotation within the flow path, as the threaded fastener threadingly engages the end cap, such as by engaging the internal surface of the flow path. In at least one embodiment, the first wedge and/or the second wedge can slide laterally outwardly along the first and second sliding surfaces, as the threaded fastener threadingly engages the end cap and the seal and the first wedge are compressed, such as to engage opposite portions of the internal surface of the flow path. In at least one embodiment, the seal can sealingly engage the internal surface of the flow path and can block flow through the flow path. In at least one embodiment, the first wedge and/or the second wedge can move laterally outwardly, with respect to one another, to engage the internal surface of the flow path for locking the apparatus in place in the flow path.

In at least one embodiment, the end cap can have a threaded opening penetrating a proximal surface, the proximal surface being adjacent to the first wedge, and/or any or all of the end cap. In at least one embodiment, the threaded opening need not extend through the end cap. In at least one embodiment, the first wedge can have a non-cylindrical inner surface and a wall between the non-cylindrical inner surface and the second non-cylindrical outer surface. In at least one embodiment, at least a portion of the end cap can slideably couple with the inner surface of the first wedge. In at least one embodiment, the wall can have a constant thickness about its periphery.

In at least one embodiment, the first angle and the second angle can be equal. In at least one embodiment, the first angle and the second angle can be 15 degrees relative to horizontal. In at least one embodiment, the first angle and the second angle can be 30 degrees relative to horizontal. In at least one embodiment, the second wedge can have a thru hole parallel to the longitudinal axis. In at least one embodiment, the thru hole can have an oblong cross-sectional area perpendicular to the longitudinal axis.

### BRIEF DESCRIPTION OF DRAWINGS

FIGS. 1-7 are various views of one of many embodiments of an apparatus for plugging a flow path according to the disclosure.
FIGS. 8-12 are various views of one of many embodiments of an end cap according to the disclosure.
FIGS. 13-17 are various views of one of many embodiments of a wedge according to the disclosure.
FIGS. 18-22 are various views of another of many embodiments of a wedge according to the disclosure.
FIGS. 23-28 are various views of another of many embodiments of an apparatus for plugging a flow path according to the disclosure.
FIGS. 29-33 are various views of another of many embodiments of an end cap according to the disclosure.
FIGS. 34-38 are various views of yet another of many embodiments of a wedge according to the disclosure.
FIGS. 39-43 are various views of still another of many embodiments of a wedge according to the disclosure.
FIG. 44 is a partial sectional view of yet another of many embodiments of an end cap according to the disclosure.
FIG. 45 is a sectional view of one of many embodiments of a manifold having a flow path according to the disclosure.

### DETAILED DESCRIPTION OF THE INVENTION

The figures described above and the written description of specific structures and functions below are not presented to limit the scope of what has been invented or the scope of the appended claims. Rather, the figures and written description are provided to teach any person skilled in the art to make and use the inventions for which patent protection is sought. Those skilled in the art will appreciate that not all features of a commercial embodiment of the inventions are described or shown for the sake of clarity and understanding. Persons of skill in this art will also appreciate that the development of an actual commercial embodiment incorporating aspects of the present inventions will require numerous implementation-specific decisions to achieve the developer's ultimate goal for the commercial embodiment. Such implementation-specific decisions may include, and likely are not limited to, compliance with system-related, business-related, government-related and other constraints, which may vary by specific implementation, location and from time to time. While a developer's efforts might be complex and time-consuming in an absolute sense, such efforts would be, nevertheless, a routine undertaking for those of skill in this art having benefit of this disclosure. It must be understood that the inventions disclosed and taught herein are susceptible to numerous and various modifications and alternative forms.

The use of a singular term, such as, but not limited to, "a," is not intended as limiting of the number of items. Also, the use of relational terms, such as, but not limited to, "top," "bottom," "left," "right," "upper," "lower," "down," "up," "side," and the like are used in the written description for clarity in specific reference to the figures and are not intended to limit the scope of the inventions or the appended claims. The terms "including" and "such as" are illustrative and not limitative. The terms "couple," "coupled," "coupling," "coupler," and like terms are used broadly herein and can include any method or device for securing, binding, bonding, fastening, attaching, joining, inserting therein, forming thereon or therein, communicating, or otherwise associating, for example, mechanically, magnetically, electrically, chemically, operably, directly or indirectly with intermediate elements, one or more pieces of members together and can further include without limitation integrally forming one functional member with another in a unity fashion. The coupling can occur in any direction, including rotationally. Further, all parts and components of the disclosure that are capable of being physically embodied inherently include imaginary and real characteristics regardless of whether such characteristics are expressly described herein, including but not limited to characteristics such as axes, ends, inner and outer surfaces, interior spaces, tops, bottoms, sides, boundaries, dimensions (e.g., height, length, width, thickness), mass, weight, volume and density, among others.

Applicant has created new and useful devices, systems and methods for securely and removably plugging a flow path with limited access thereto and with minimal or no damage to the flow path. In at least one embodiment, an apparatus according to the disclosure can include an end cap having a head and a neck, a seal disposed about the neck and configured to selectively sealingly engage an internal surface of a flow path, a first wedge having a first sliding surface, a second wedge having a second sliding surface, and an actuator. In at least one embodiment, the actuator and the end cap can compress the seal and/or the first wedge between the end cap and the second wedge. In at least one embodiment, the first wedge and/or the second wedge can move outwardly, as the seal and the first wedge are compressed, for engaging the internal surface of the flow path. In at least one embodiment, an apparatus according to the disclosure can be utilized for plugging a cylindrical or circular flow path. In at least one embodiment, an apparatus according to the disclosure can be utilized for plugging a non-cylindrical or non-circular flow path.

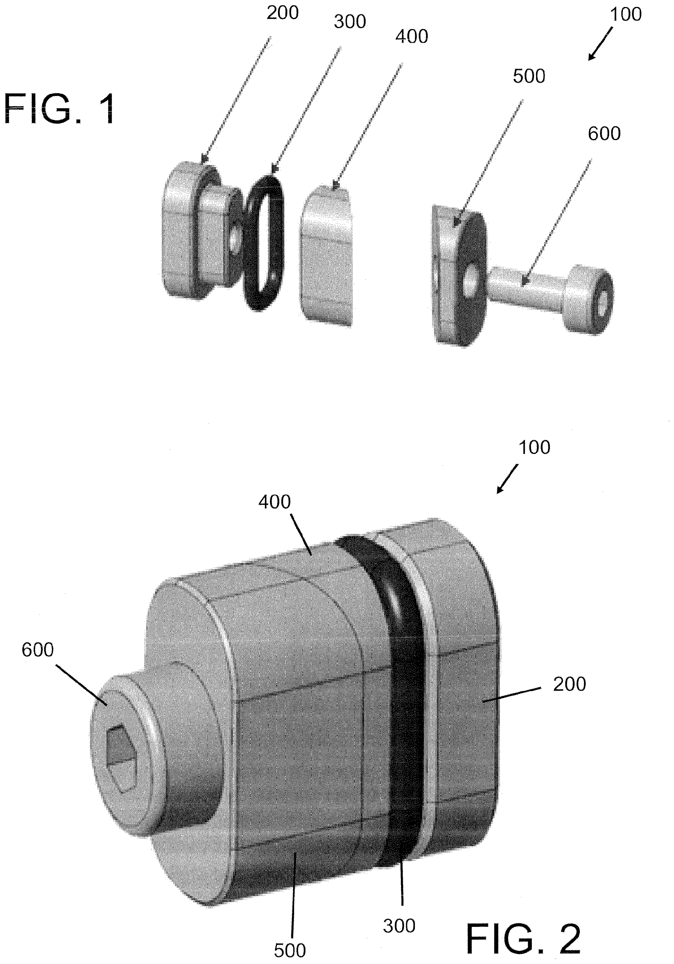

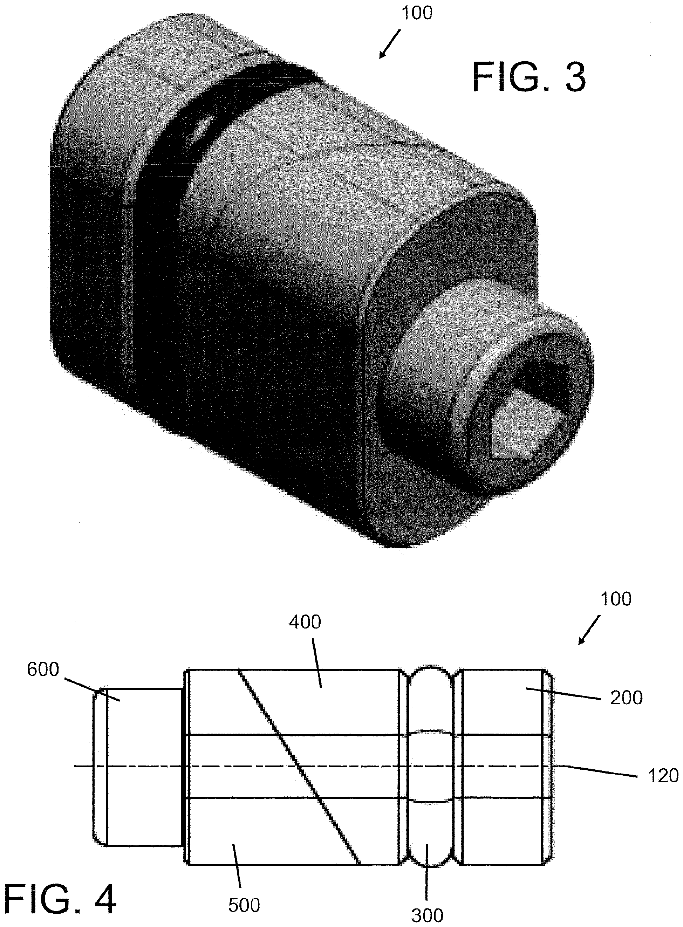

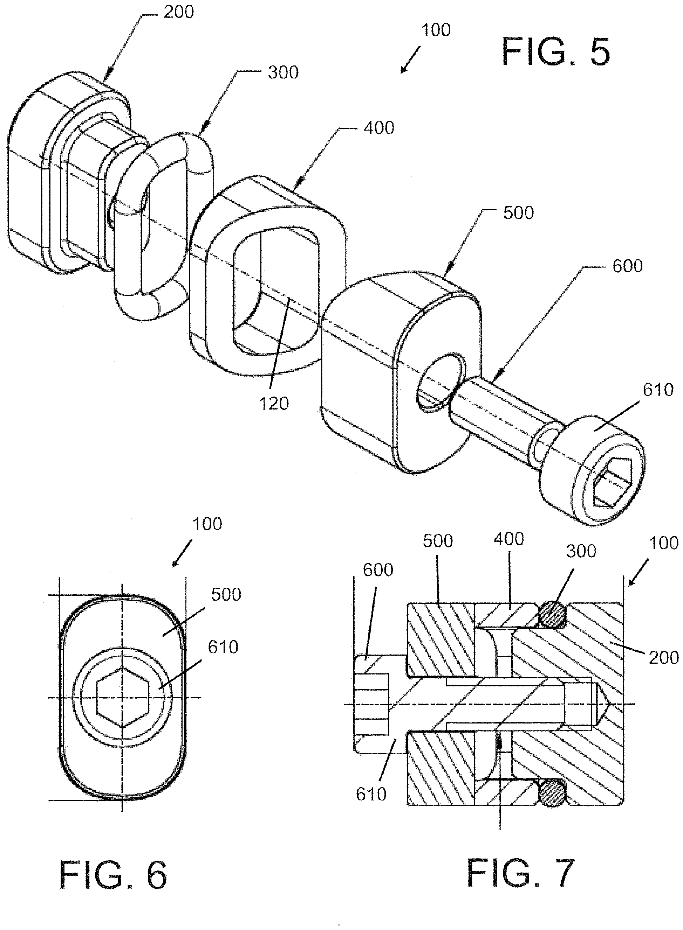

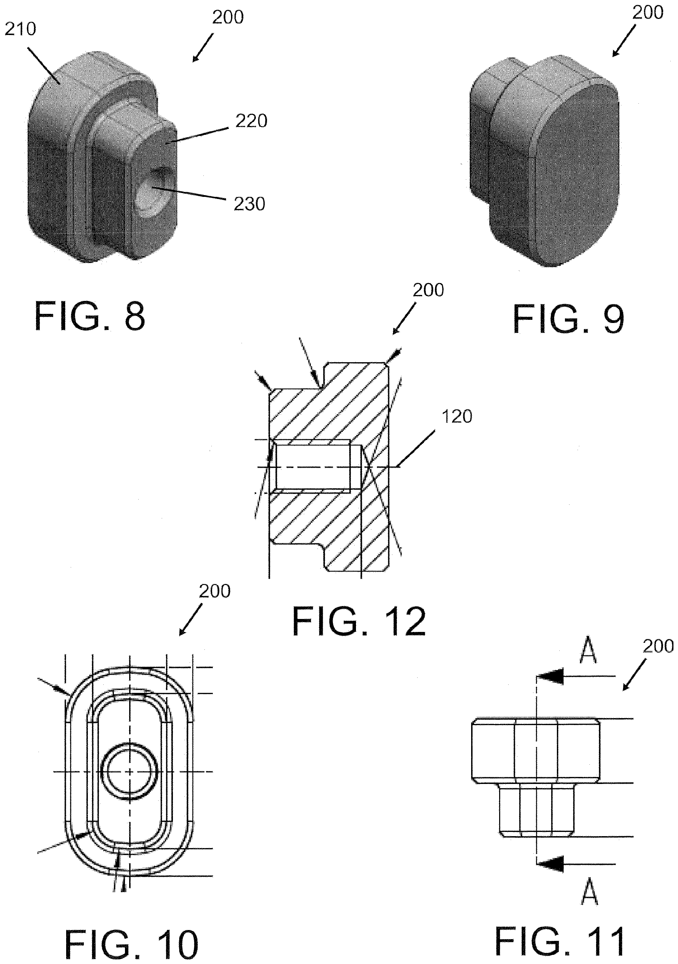

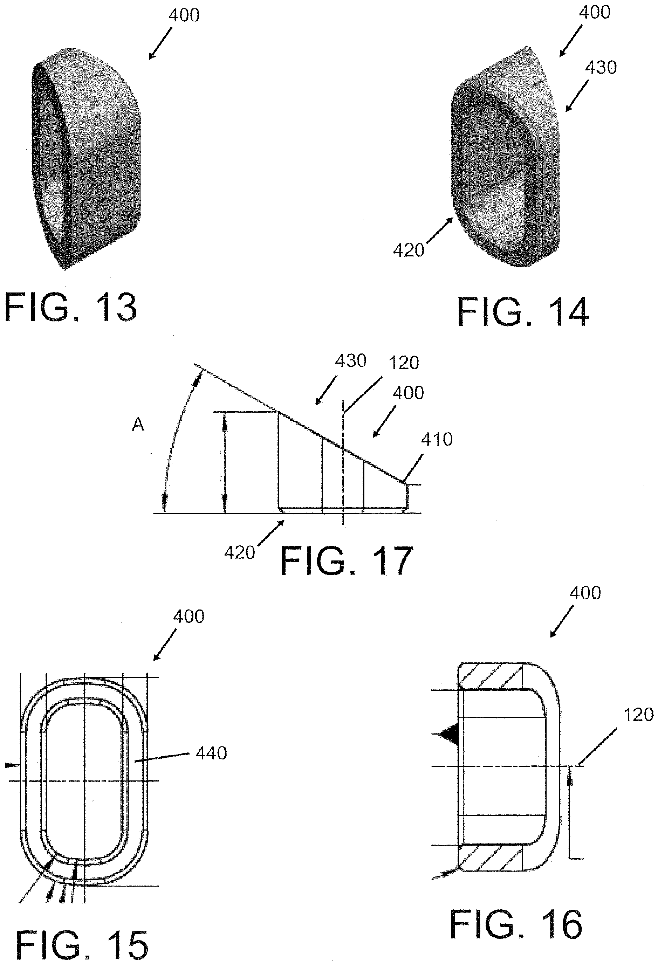

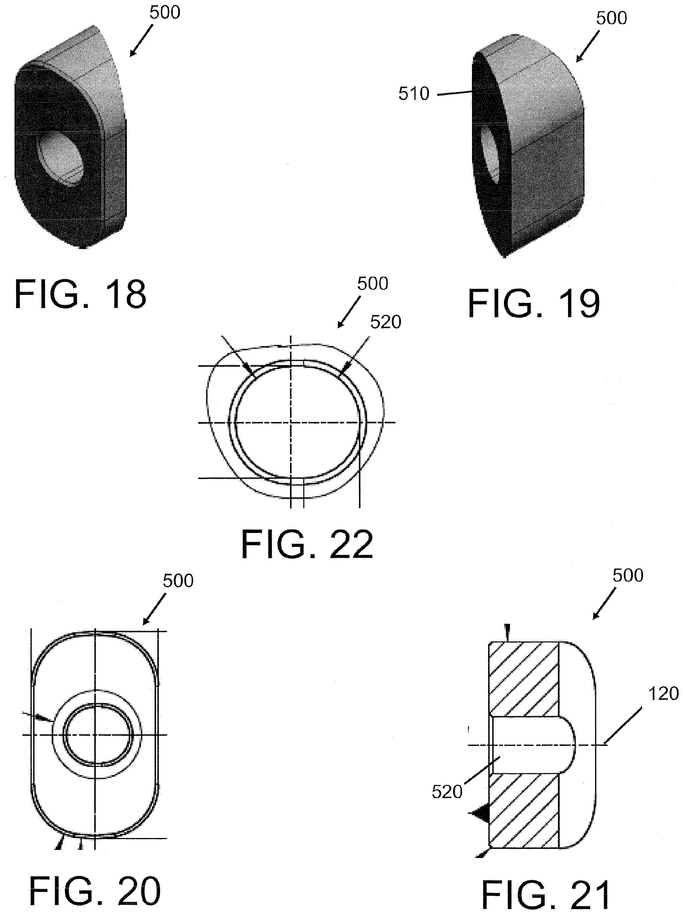

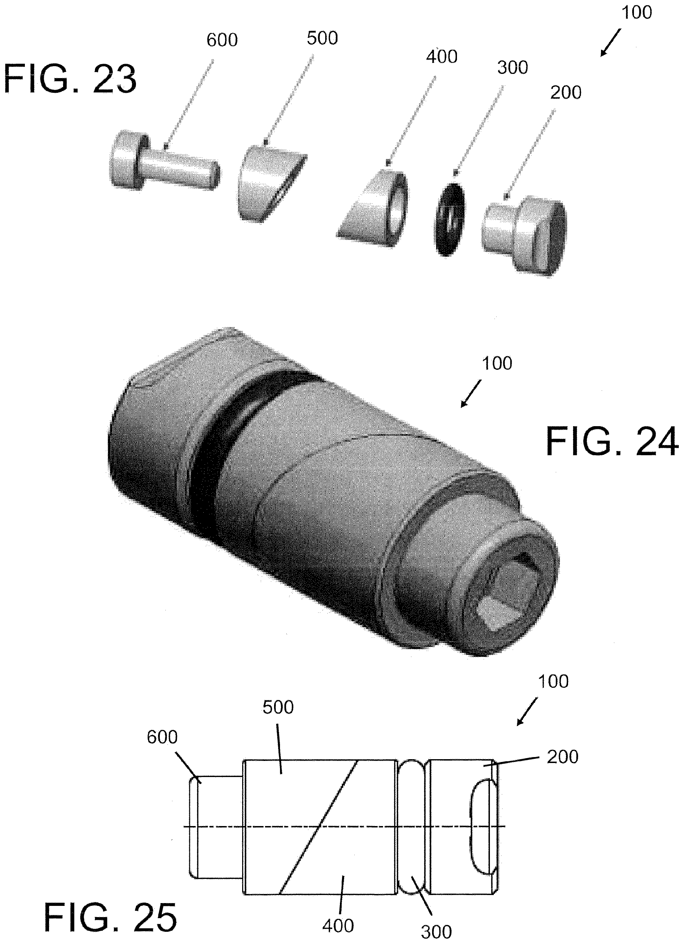

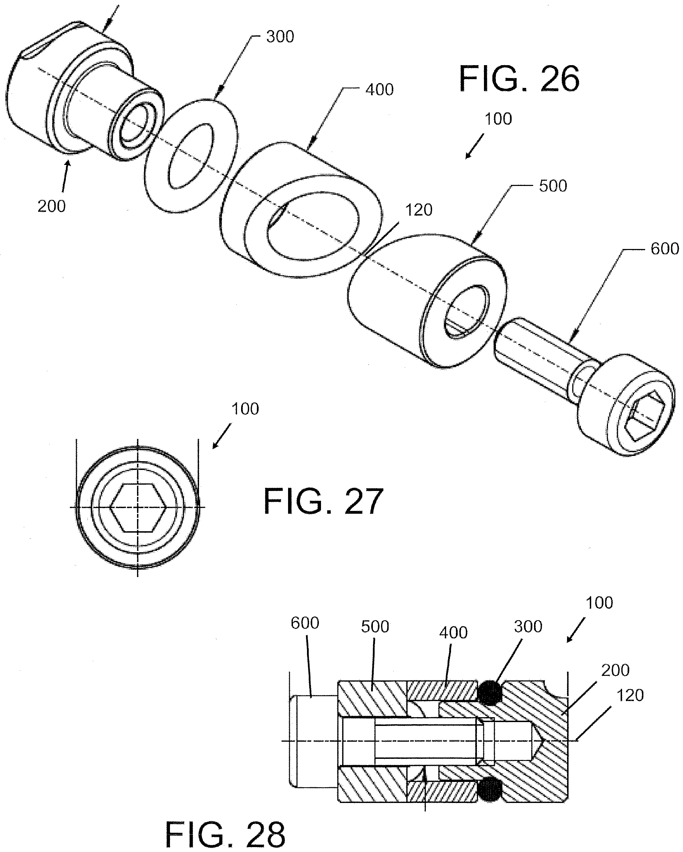

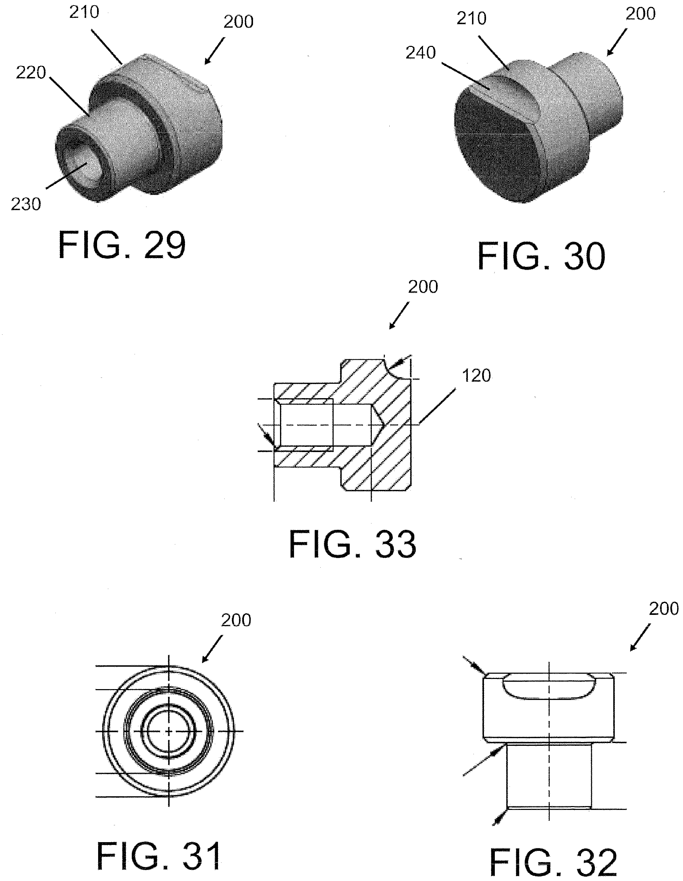

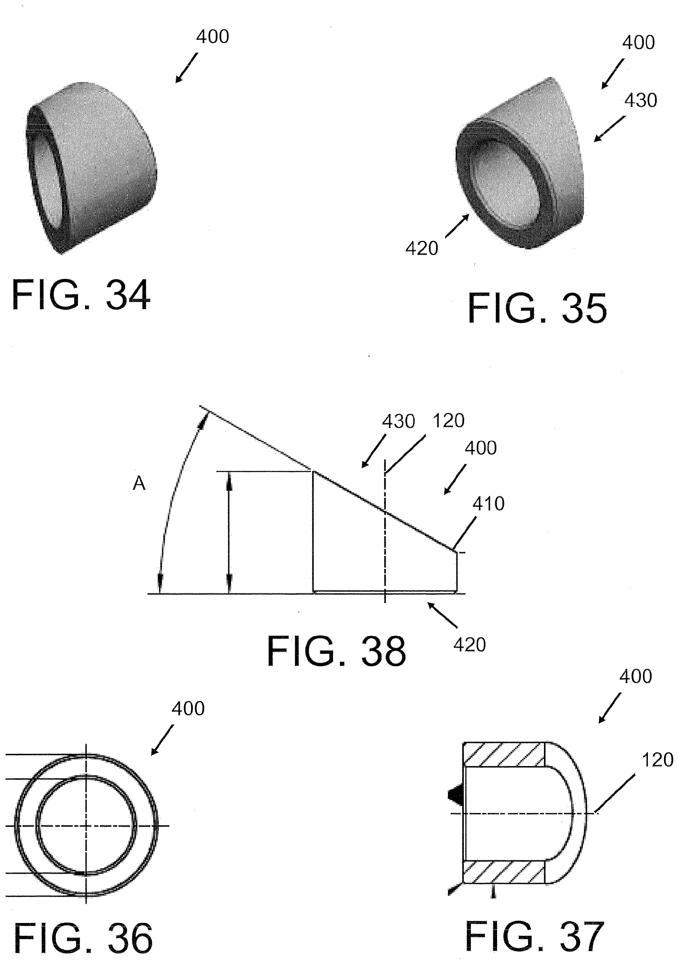

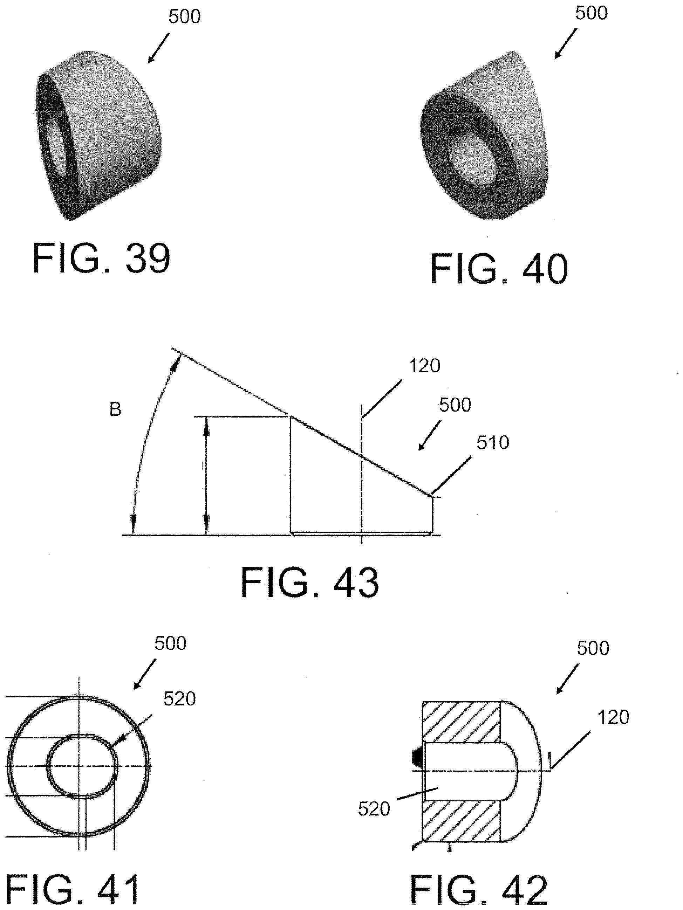

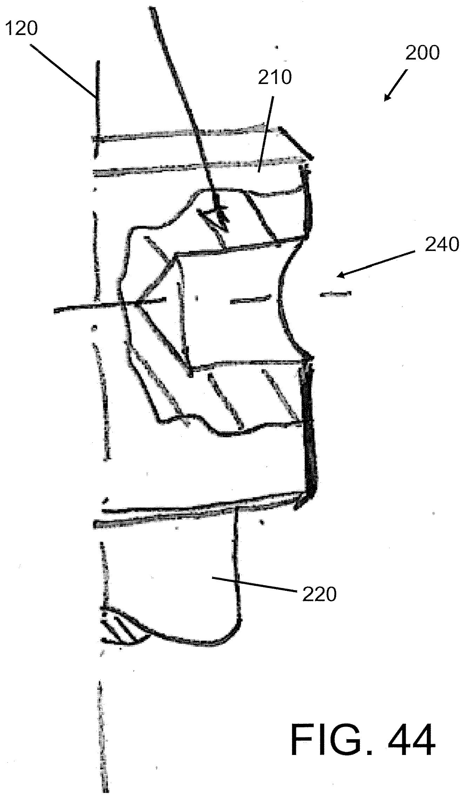

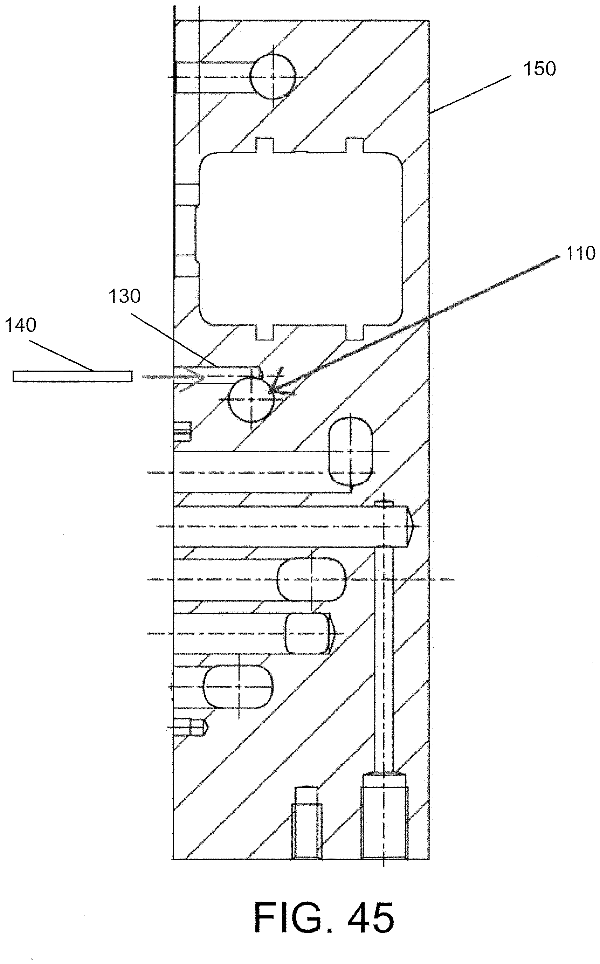

FIGS. 1-7 are various views of one of many embodiments of an apparatus for plugging a flow path according to the disclosure. FIGS. 8-12 are various views of one of many embodiments of an end cap according to the disclosure. FIGS. 13-17 are various views of one of many embodiments of a wedge according to the disclosure. FIGS. 18-22 are various views of another of many embodiments of a wedge according to the disclosure. FIGS. 23-28 are various views of another of many embodiments of an apparatus for plugging a flow path according to the disclosure. FIGS. 29-33 are various views of another of many embodiments of an end cap according to the disclosure. FIGS. 34-38 are various views of yet another of many embodiments of a wedge according to the disclosure. FIGS. 39-43 are various views of still another of many embodiments of a wedge according to the disclosure. FIG. 44 is a partial sectional view of yet another of many embodiments of an end cap according to the disclosure. FIG. 45 is a sectional view of one of many embodiments of a manifold having a flow path according to the disclosure. FIGS. 1-45 are described in conjunction with one another.

In at least one embodiment, an apparatus 100 according to the disclosure, such as an apparatus for plugging or sealing a flow path 110, can include one or more end caps 200 having one or more heads 210 and one or more necks 220, one or more seals 300 disposed about the neck 220 for selectively sealingly engaging one or more internal surfaces of the flow path 110, one or more first wedges 400 having one or more first sliding surfaces 410 aligned at one or more angles with respect to a longitudinal axis 120 of the apparatus 100 or otherwise, one or more second wedges 500 having one or more second sliding surfaces 510 for engaging the first sliding surface 410, one or more actuators 600, or any combination thereof. In at least one embodiment, actuator 600 can be disposed at least partially through the seal 300, the first wedge 400, and the second wedge 500, or any combination thereof. In at least one embodiment, the first wedge 400 can have a first end 420 configured to engage the seal 300, and a longitudinally opposite second end 430. In at least one embodiment, the first sliding surface 410 can be on the second end 430 of the first wedge.

In at least one embodiment, the first sliding surface 410 can be aligned at a first angle A relative to the longitudinal axis 120 and/or to horizontal. In at least one embodiment, the second sliding surface 510 can be aligned at a second angle B relative to the longitudinal axis 120 and/or to horizontal. In at least one embodiment, the angles of the wedge surfaces or sliding surfaces of the wedges 400, 500, such as first, second or other angles, can be the same. In at least one embodiment, the angles of the wedge surfaces or sliding surfaces of the wedges 400, 500, such as first, second or other angles, can be different. In at least one embodiment, the angles of the wedge surfaces or sliding surfaces of the wedges 400, 500 can be any angle or angles sufficient for locking apparatus 100 in place along a flow path 110 according to an implementation of the disclosure. In at least one embodiment, the first angle A and/or the second angle B can be from 10 degrees to 45 degrees relative to horizontal. In at least one embodiment, the first angle A and/or the second angle B can be from 15 degrees to 30 degrees relative to horizontal. In at least one embodiment, the first angle A and/or the second angle B can be at least approximately 15 degrees. In at least one embodiment, the first angle A and/or the second angle B can be at least approximately 30 degrees. In at least one embodiment, the first sliding surface 410 can be on the second end 430 of the first wedge. In at least one embodiment, the second sliding surface 510 can be disposed in sliding communication with the first sliding surface 410.

In at least one embodiment, the actuator 600 can have a first end rotatably coupled to the end cap 200. In at least one embodiment, the first end of the actuator 600 can be threadably coupled to the end cap 200. In at least one embodiment, the actuator 600 and the end cap 200 can compress the seal 300 and/or the first wedge 400 between the end cap 200 and the second wedge 500. In at least one embodiment, the first wedge 400 and/or the second wedge 500 can move outwardly, such as by way of sliding laterally outwardly, with respect to one another, along the first and second sliding surfaces 410, 510, as the seal 300 and the first wedge 400 are compressed, such as to engage the internal surface of the flow path 110.

In at least one embodiment, the end cap 200, the first wedge 400, the second wedge 500, the actuator 600, or any combination thereof, can be made of metal and/or polymer. In at least one embodiment, the seal 300 can be made of an elastomeric material. In at least one embodiment, the end cap 200, the seal 300, the first wedge 400, the second wedge 500, the actuator 600, or any combination thereof, can be sized and shaped to fit within the flow path 110 without damage to any of the end cap 200, the seal 300, the first wedge 400, the second wedge 500, the actuator 600, and/or the flow path 110. In at least one embodiment, upon compression, the seal 300 can expand to seal the flow path 110 and/or otherwise block or restrict flow therethrough. In at least one embodiment, the first wedge 400 can be laterally fixed, with respect to the end cap 200, such that the first wedge 400 does not move with respect thereto, and the second wedge 500 can slide laterally outwardly relative to the first wedge 400, and/or to one or more other components of the apparatus 100, to lock or fix the apparatus 100 at a location within the flow path 110.

In at least one embodiment, the end cap 200 can include a threaded opening 230 in the neck 220. In at least one embodiment, the head 210 of the end cap 200 can be closed. In at least one embodiment, the end cap 200 can have a threaded opening 230 therein, such as in a proximal surface disposed adjacent to the first wedge 400. In at least one embodiment, the threaded opening 230 need not extend through the end cap 200. In at least one embodiment, the threaded opening 230 can be part of a threaded bore in the end cap 200, such as a threaded bore through at least a portion of the neck 220 of the end cap 200.

In at least one embodiment, the end cap 200 can have a non-cylindrical outer surface configured to resist rotation within the flow path 110 by engaging one or more internal surfaces of the flow path 110, such as a flow path 110 having the same or a similar cross-sectional shape as the non-cylindrical end cap 200. In at least one embodiment, the non-cylindrical outer surface can be oval, elliptical, oblong, and/or can have one or more flat sides. In at least one embodiment, the end cap 200 can have a cylindrical outer surface. In at least one embodiment, the neck 220 of the end cap 200 can have a cylindrical outer surface and the head 210 of the end cap can have a non-cylindrical outer surface.

In at least one embodiment, the head 210 of the end cap 200 can have a recess or other feature 240 for resisting rotation of the end cap 200, such as a feature 240 for mating with or otherwise cooperating with one or more other surfaces or structures. In at least one embodiment, a tool 140 can be used with the apparatus 100 to resist rotation of the end cap 200, such as during installation. In at least one embodiment, the feature 240 and/or the head 210 of the end cap 200 can couple with a tool 140 inserted through an intersecting path 130, such as an intersecting path 130 that laterally or otherwise intersects the flow path 110, to resist rotation of the end cap 200. In at least one embodiment, the tool 140 can be placed or inserted through an intersecting path 130, such as in a manifold 150 or other structure having one or more fluid paths, and the intersecting path 130 can intersect the flow path 110 at an angle, to engage the feature 240 and resist rotation of the end cap 200. In at least one embodiment, the feature 240 can be or include a cutout, hole, radiused portion, chamfered portion, groove, tongue, recess, or other structure in an edge or surface of the head 210 of the end cap 200. In at least one embodiment, the feature 240 can comprise a hole or opening in a surface of the head 210 of the end cap 200, such as perpendicular to the longitudinal axis 120 of the apparatus 100. In at least one embodiment, the feature 240 can comprise one or more flat or contoured edges. In at least one embodiment, the feature 240 can comprise a receptacle or other feature for mating or cooperating with a tool 140 or a portion thereof, such as a slotted screw driver, a Philips head screw driver, a Torx driver, an Allen wrench, a rod, a key, an awl, another type of tool, or any combination thereof.

In at least one embodiment, the first wedge 400 can have a non-cylindrical outer surface, a non-cylindrical inner surface, and a wall 440. In at least one embodiment, at least a portion of the end cap 200 can slideably couple with the inner surface of the first wedge 400, allowing the first wedge 400 to slide with respect thereto. In at least one embodiment, at least a portion of the end cap 200 can longitudinally and/or laterally slideably couple with the inner surface of the first wedge 400, allowing the first wedge 400 to longitudinally and/or laterally slide with respect thereto. In at least one embodiment, at least a portion of the end cap 200 can slideably couple with the inner surface of the first wedge 400, allowing the first wedge 400 to slide (longitudinally or laterally, but not both) with respect thereto. In at least one embodiment, at least a portion of the end cap 200 can slideably couple with the inner surface of the first wedge 400, allowing the first wedge 400 to slide (longitudinally but not laterally) with respect thereto. In at least one embodiment, at least a portion of the neck 220 of the end cap 200 can slideably couple with the inner surface of the first wedge 400. In at least one embodiment, the wall 440 can have a constant thickness, such as about a periphery of the first wedge 400. In at least one embodiment, the wall 440 can have a thickness that varies, , such as about a periphery of the first wedge 400.

In at least one embodiment, the second wedge 500 can include a thru hole 520 concentric with or parallel to the longitudinal axis 120 of the apparatus 100. In at least one embodiment, the thru hole 520 can have an oblong cross-sectional shape. In at least one embodiment, an oblong thru hole 520 can allow the second wedge 500 to slide laterally with respect to the first wedge 400 and/or other components of the apparatus 100. In at least one embodiment, the second wedge 500 can have a non-cylindrical outer surface. In at least one embodiment, such as where the flow path 110 is oblong, elliptical, or oval, the first wedge 400 and/or second wedge 500 can slide laterally towards the ends and/or the sides of the oblong, elliptical, or oval flow path 110.

In at least one embodiment, any or each of the first wedge 400, the second wedge 500, and the seal 300 can be of a non-cylindrical cross-sectional shape, such as in a direction or plane perpendicular to the longitudinal axis 120 of the apparatus 100. In at least one embodiment, the seal 300 can be disposed longitudinally between a shoulder of the end cap 200 and a bottom surface of the first wedge 400. In at least one embodiment, one or both of the first and second wedges 400, 500 can have one or more smooth outer surfaces for engaging the internal surface of the flow path 100, such as to prevent damage thereto. In at least one embodiment, the neck 220 of the end cap 200 can be or include a boss for aligning the first wedge 400 relative to the end cap 200. In at least one embodiment, the actuator 600 can have a head 610 configured to force the second wedge 500 towards the end cap 200. In at least one embodiment, the actuator 600 can comprise a screw, bolt, or other threaded fastener. In at least one embodiment, the actuator 600 can utilize another coupling means, such as a quarter-turn coupling or other arrangement for coupling apparatus 100 to a flow path 100 in accordance with an implementation of the disclosure. In at least one embodiment, the head 610 of the actuator 600 can have one or more flat edges and or a receptacle for a tool, such as a slotted screw driver, a Philips head screw driver, a Torx driver, an Allen key, another type of tool, or any combination thereof.

In at least one embodiment, the first and second wedges 400, 500 can engage the internal surface of the flow path 110 laterally to longitudinally fix the apparatus 100 in place relative to the flow path 110. In at least one embodiment, the seal 300 can deform radially outwardly to sealingly engage the internal surface of the flow path 110. In at least one embodiment, the first wedge 400 and/or the second wedge 500 can be tubular. In at least one embodiment, the second wedge 500 can have an irregular thru hole 520 there through. In at least one embodiment, the second wedge 500 can have a top surface configured to couple with the actuator 600.

In at least one embodiment, an apparatus 100 for plugging a non-cylindrical flow path 110 can include an end cap 200 having a first non-cylindrical outer surface, a head 210, and a neck 220, a seal 300 disposed about the neck 220 and configured to selectively sealingly engage an internal surface of the flow path 110, a first wedge 400 having a first sliding surface 410 aligned at a first angle with respect to a longitudinal axis 120 of the apparatus 100, a second wedge 500 having a second sliding surface 510 configured to engage the first sliding surface 410, an actuator 600 disposed at least partially through the seal 300, the first wedge 400, and the second wedge 500, or any combination thereof. In at least one embodiment, the first wedge 400 can have a first end 420 configured to engage the seal 300 and a longitudinally opposite second end 430. In at least one embodiment, first sliding surface 410 can be on the second end 430 of the first wedge 400. In at least one embodiment, the second sliding surface 510 can be aligned at a second angle with respect to the longitudinal axis 120. In at least one embodiment, the actuator 600 can have a first end rotatably coupled to the end cap 200. In at least one embodiment, the actuator 600 and the end cap 200 can compress the seal 300 and/or the first wedge 400 between the end cap 200 and the second wedge 500. In at least one embodiment, the first non-cylindrical outer surface of the end cap 200 can resist rotation within the flow path 110, as the actuator 600 rotates with respect to the end cap 200, such as by engaging the internal surface of the flow path 110. In at least one embodiment, the first wedge 400 and/or the second wedge 500 can slide laterally outwardly, with respect to one another, along the first and second sliding surfaces 410, 510, as the actuator 600 rotates with respect to the end cap 200 and the seal 300 and/or the first wedge 400 are compressed, such as to engage the internal surface of the flow path 110.

In at least one embodiment, the end cap 200 can include a threaded opening 230 penetrating a proximal surface, the proximal surface being adjacent to the first wedge 400. In at least one embodiment, the threaded opening 230 need not extend through the end cap.

In at least one embodiment, the first wedge 400 can have a non-cylindrical outer surface, a non-cylindrical inner surface, and a wall 440 therebetween. In at least one embodiment, at least a portion of the end cap 200 can slideably couple with the inner surface of the first wedge 400. In at least one embodiment, the wall 440 can have a constant thickness about its periphery.

In at least one embodiment, the first angle and the second angle can be equal. In at least one embodiment, the first angle and the second angle can be from 20 degrees to 80 degrees relative to the longitudinal axis 120. In at least one embodiment, the first angle and the second angle can be from 60 degrees to 75 degrees relative to the longitudinal axis 120.

In at least one embodiment, the second wedge 500 can have a thru hole 520 parallel with the longitudinal axis 120. In at least one embodiment, the thru hole 520 can have an oblong cross-sectional shape or area perpendicular to the longitudinal axis 120. In at least one embodiment, the second wedge 500 can have a non-cylindrical outer surface.

In at least one embodiment, an apparatus 100 for plugging a non-cylindrical flow path 110 can include an end cap 200 having a first non-cylindrical outer surface, a head 210, and a neck 220, a seal 300 disposed about the neck 220 and configured to selectively sealingly engage an internal surface of the flow path 110, a first wedge 400 having a second non-cylindrical outer surface and a first sliding surface 410 aligned at a first angle with respect to a longitudinal axis 120 of the apparatus 100, a second wedge 500 having a third non-cylindrical outer surface and a second sliding surface 510 configured to engage the first sliding surface 410, a threaded fastener 600 disposed at least partially through the seal 300, the first wedge 400, and the second wedge 500, or any combination thereof.

In at least one embodiment, the first wedge 400 can have a first end 420 configured to engage the seal 300. In at least one embodiment, the first wedge 400 can have a longitudinally opposite second end 430. In at least one embodiment, the first sliding surface 410 can be on the second end 430 of the first wedge 400. In at least one embodiment, the second sliding surface 510 can be aligned at a second angle with respect to the longitudinal axis 120. In at least one embodiment, the threaded fastener 600 can have a first end threadably coupled to the end cap 200. In at least one embodiment, the threaded fastener 600 and the end cap 200 can compress the seal 300 and/or the first wedge 400 between the end cap 200 and the second wedge 500.

In at least one embodiment, the first non-cylindrical outer surface of the end cap 200 can resist rotation within the flow path 110 , as the threaded fastener 600 threadingly engages the end cap 200, such as by engaging the internal surface of the flow path 110. In at least one embodiment, the first wedge 400 and/or the second wedge 500 can slide laterally outwardly along the first and second sliding surfaces 410, 510, as the threaded fastener 600 threadingly engages the end cap 200 and the seal 300 and/or the first wedge 400 are compressed, such as to engage opposite portions of the internal surface of the flow path 110. In at least one embodiment, the seal 300 sealingly engaging the internal surface of the flow path 110 can block flow through the flow path 110. In at least one embodiment, the first wedge 410 and/or the second wedge 510 can slide laterally outwardly, with respect to one another, to engage the internal surface of the flow path 110 to lock the apparatus 100 in place in the flow path 110.

In at least one embodiment, the end cap 200 can have a threaded opening 230 in a proximal surface thereof, and the proximal surface can be disposed adjacent to the first wedge 400, and/or any or all of the end cap 200. In at least one embodiment, the threaded opening 230 need not extend through the end cap 200, and the end cap 200 can be closed on at least one end.

In at least one embodiment, the first wedge 400 can have a non-cylindrical inner surface and a wall 440 between the non-cylindrical inner surface and the second non-cylindrical outer surface. In at least one embodiment, at least a portion of the end cap 200 can slideably couple with the inner surface of the first wedge 400. In at least one embodiment, the wall 440 can have a constant thickness about its periphery.

In at least one embodiment, the first angle and the second angle can be equal. In at least one embodiment, the first angle and the second angle can be from 20 degrees to 80 degrees relative to the longitudinal axis 120. In at least one embodiment, the first angle and the second angle can be from 60 degrees to 75 degrees relative to the longitudinal axis 120. In at least one embodiment, the second wedge 500 can have a thru hole 520 parallel to the longitudinal axis 120. In at least one embodiment, the thru hole 520 can have an oblong cross-sectional area perpendicular to the longitudinal axis 120.

In at least one embodiment, an apparatus for plugging a flow path can include an end cap having a head and a neck, a seal disposed about the neck and configured to selectively sealingly engage an internal surface of the flow path, a first wedge having a first sliding surface aligned at a first angle with respect to a longitudinal axis of the apparatus, a second wedge having a second sliding surface configured to engage the first sliding surface, an actuator disposed at least partially through the seal, the first wedge, and the second wedge, or any combination thereof. In at least one embodiment, the first wedge can have a first end configured to engage the seal and a longitudinally opposite second end. In at least one embodiment, the first sliding surface can be on the second end of the first wedge. In at least one embodiment, the second sliding surface can be aligned at a second angle with respect to the longitudinal axis. In at least one embodiment, the actuator can have a first end rotatably coupled to the end cap. In at least one embodiment, the first end of the actuator can be threadably coupled to the end cap. In at least one embodiment, the actuator and the end cap can compress the seal and/or the first wedge between the end cap and the second wedge. In at least one embodiment, the first wedge and/or the second wedge can slide laterally outwardly, with respect to one another, along the first and second sliding surfaces, as the seal and the first wedge are compressed, such as to engage the internal surface of the flow path.

In at least one embodiment, the end cap can include a threaded opening in the neck. In at least one embodiment, the head of the end cap can be closed. In at least one embodiment, the end cap can have a threaded opening penetrating a proximal surface, the proximal surface being adjacent to the first wedge. In at least one embodiment, the threaded opening need not extend through the end cap.

In at least one embodiment, the end cap can have a non-cylindrical outer surface configured to resist rotation within the flow path by engaging the internal surface of the flow path. In at least one embodiment, the end cap can have a cylindrical outer surface. In at least one embodiment, the outer surface of the end cap can have a recess configured to resist rotation of the end cap. In at least one embodiment, the head of the end cap can couple with a tool inserted through an intersecting path that laterally intersects the flow path to resist rotation of the end cap. In at least one embodiment, a tool can be used with the apparatus to resist rotation of the end cap. In at least one embodiment, the tool can be placed through an intersecting path, the intersecting path intersecting the flow path at an angle, to engage the recess and thereby resist rotation of the end cap.

In at least one embodiment, the first wedge can have a non-cylindrical outer surface, a non-cylindrical inner surface, and a wall therebetween. In at least one embodiment, at least a portion of the end cap can slideably couple with the inner surface of the first wedge. In at least one embodiment, at least a portion of the neck of the end cap can slideably couple with the inner surface of the first wedge. In at least one embodiment, the wall can have a constant thickness about its periphery.

In at least one embodiment, the first angle and the second angle can be equal. In at least one embodiment, the first angle and the second angle can be from 20 degrees to 80 degrees relative to the longitudinal axis 120. In at least one embodiment, the first angle and the second angle can be from 60 degrees to 75 degrees relative to the longitudinal axis 120. In at least one embodiment, the first angle and/or the second angle can be from at least approximately 15 degrees to at least approximately 30 degrees relative to horizontal.

In at least one embodiment, the second wedge can include a thru hole parallel to the longitudinal axis of the apparatus. In at least one embodiment, the thru hole can have an oblong cross-sectional shape. In at least one embodiment, the second wedge can have a non-cylindrical outer surface.

In at least one embodiment, any or each of the first wedge, the second wedge, and the seal can be of a non-cylindrical cross-sectional shape in a direction or plane perpendicular to the longitudinal axis of the apparatus. In at least one embodiment, the seal can be disposed longitudinally between a shoulder of the end cap and a bottom surface of the first wedge. In at least one embodiment, one or both of the first and second wedges can have a smooth outer surface configured to engage the internal surface of the flow path. In at least one embodiment, the neck of the end cap can have a boss configured to align the first wedge relative to the end cap. In at least one embodiment, the actuator can have a head configured to force the second wedge towards the end cap. In at least one embodiment, the first and second wedges can engage the internal surface of the flow path laterally to longitudinally fix the apparatus in place relative to the flow path. In at least one embodiment, the seal can deform radially outwardly to sealingly engage the internal surface of the flow path. In at least one embodiment, the first wedge and/or the second wedge can be tubular. In at least one embodiment, the second wedge can have an irregular thru hole there through. In at least one embodiment, the second wedge can have a top surface configured to couple with the actuator.

In at least one embodiment, an apparatus for plugging a non-cylindrical flow path can include an end cap having a first non-cylindrical outer surface, a head, and a neck, a seal disposed about the neck and configured to selectively sealingly engage an internal surface of the flow path, a first wedge having a first sliding surface aligned at a first angle with respect to a longitudinal axis of the apparatus, a second wedge having a second sliding surface configured to engage the first sliding surface, an actuator disposed at least partially through the seal, the first wedge, and the second wedge, or any combination thereof. In at least one embodiment, the first wedge can have a first end configured to engage the seal and a longitudinally opposite second end. In at least one embodiment, first sliding surface can be on the second end of the first wedge. In at least one embodiment, the second sliding surface can be aligned at a second angle with respect to the longitudinal axis. In at least one embodiment, the actuator can have a first end rotatably coupled to the end cap. In at least one embodiment, the actuator and the end cap can compress the seal and/or the first wedge between the end cap and the second wedge. In at least one embodiment, the first non-cylindrical outer surface of the end cap can resist rotation within the flow path, as the actuator rotates with respect to the end cap, such as by engaging the internal surface of the flow path. In at least one embodiment, the first wedge and/or the second wedge can slide laterally outwardly, with respect to one another, along the first and second sliding surfaces, as the actuator rotates with respect to the end cap and the seal and/or the first wedge are compressed, such as to engage the internal surface of the flow path.

In at least one embodiment, the end cap can include a threaded opening penetrating a proximal surface, the proximal surface being adjacent to the first wedge. In at least one embodiment, the threaded opening need not extend through the end cap.

In at least one embodiment, the first wedge can have a non-cylindrical outer surface, a non-cylindrical inner surface, and a wall therebetween. In at least one embodiment, at least a portion of the end cap can slideably couple with the inner surface of the first wedge. In at least one embodiment, the wall can have a constant thickness about its periphery.

In at least one embodiment, the first angle and the second angle can be equal. In at least one embodiment, the first angle and the second angle can be from 20 degrees to 80 degrees relative to the longitudinal axis 120. In at least one embodiment, the first angle and the second angle can be from 60 degrees to 75 degrees relative to the longitudinal axis 120. In at least one embodiment, the first angle and the second angle can be different from one another.

In at least one embodiment, the second wedge can have a thru hole parallel with the longitudinal axis. In at least one embodiment, the thru hole can have an oblong cross-sectional area perpendicular to the longitudinal axis. In at least one embodiment, the second wedge can have a non-cylindrical outer surface.

In at least one embodiment, an apparatus for plugging a non-cylindrical flow path can include an end cap having a first non-cylindrical outer surface, a head, and a neck, a seal disposed about the neck and configured to selectively sealingly engage an internal surface of the flow path, a first wedge having a second non-cylindrical outer surface and a first sliding surface aligned at a first angle with respect to a longitudinal axis of the apparatus, a second wedge having a third non-cylindrical outer surface and a second sliding surface configured to engage the first sliding surface, a threaded fastener disposed at least partially through the seal, the first wedge, and the second wedge, or any combination thereof. In at least one embodiment, the first wedge can have a first end configured to engage the seal. In at least one embodiment, the first wedge can have a longitudinally opposite second end. In at least one embodiment, the first sliding surface can be on the second end of the first wedge. In at least one embodiment, the second sliding surface can be aligned at a second angle with respect to the longitudinal axis. In at least one embodiment, the threaded fastener can have a first end threadably coupled to the end cap. In at least one embodiment, the threaded fastener and the end cap can compress the seal and/or the first wedge between the end cap and the second wedge. In at least one embodiment, the first non-cylindrical outer surface of the end cap can resist rotation within the flow path, as the threaded fastener threadingly engages the end cap, such as by engaging the internal surface of the flow path. In at least one embodiment, the first wedge and/or the second wedge can slide laterally outwardly along the first and second sliding surfaces, as the threaded fastener threadingly engages the end cap and the seal and the first wedge are compressed, such as to engage opposite portions of the internal surface of the flow path. In at least one embodiment, the seal sealingly engaging the internal surface of the flow path can block flow through the flow path. In at least one embodiment, the first wedge and/or the second wedge can slide laterally outwardly, with respect to one another, to engage the internal surface of the flow path to lock the apparatus in place in the flow path.

In at least one embodiment, the end cap can have a threaded opening penetrating a proximal surface, the proximal surface being adjacent to the first wedge, and/or any or all of the end cap. In at least one embodiment, the threaded opening need not extend through the end cap.

In at least one embodiment, the first wedge can have a non-cylindrical inner surface and a wall between the non-cylindrical inner surface and the second non-cylindrical outer surface. In at least one embodiment, at least a portion of the end cap can slideably couple with the inner surface of the first wedge. In at least one embodiment, the wall can have a constant thickness about its periphery.

In at least one embodiment, the first angle and the second angle can be equal. In at least one embodiment, the first angle and the second angle can be from 20 degrees to 80 degrees relative to the longitudinal axis 120. In at least one embodiment, the first angle and the second angle can be from 60 degrees to 75 degrees relative to the longitudinal axis.

In at least one embodiment, the second wedge can have a thru hole parallel to the longitudinal axis. In at least one embodiment, the thru hole can have an oblong cross-sectional shape perpendicular to the longitudinal axis.

Other and further embodiments utilizing one or more aspects of the disclosure can be devised without departing from the spirit of Applicant's disclosure. For example, the devices, systems and methods can be implemented for numerous different types and sizes in numerous different industries. Further, the various methods and embodiments of the devices, systems and methods can be included in combination with each other to produce variations of the disclosed methods and embodiments. Discussion of singular elements can include plural elements and vice versa. The order of steps can occur in a variety of sequences unless otherwise specifically limited. The various steps described herein can be combined with other steps, interlineated with the stated steps, and/or split into multiple steps. Similarly, elements have been described functionally and can be embodied as separate components or can be combined into components having multiple functions.

The inventions have been described in the context of preferred and other embodiments and not every embodiment of the inventions has been described. Obvious modifications and alterations to the described embodiments are available to those of ordinary skill in the art having the benefits of the present disclosure. The disclosed and undisclosed embodiments are not intended to limit or restrict the scope or applicability of the inventions conceived of by the Applicant, but rather, in conformity with the patent laws, Applicant intends to fully protect all such modifications and improvements that come within the scope or range of equivalents of the following claims.

## Claims

1. An apparatus for plugging a flow path, the apparatus comprising:
an end cap having a head and a neck;
a seal disposed about the neck and configured to selectively sealingly engage an internal surface of the flow path;
a first wedge having a first end configured to engage the seal and a longitudinally opposite second end, wherein the longitudinally opposite second end comprises a first sliding surface aligned at a first angle with respect to a longitudinal axis of the apparatus;
a second wedge having a second sliding surface configured to engage the first sliding surface, the second sliding surface being aligned at a second angle with respect to the longitudinal axis; and
an actuator disposed at least partially through the seal, the first wedge, and the second wedge, the actuator having a first end rotatably coupled to the end cap;
wherein the actuator and the end cap are configured to compress the seal and the first wedge between the end cap and the second wedge; and
wherein the first and second wedges are configured to slide laterally outwardly along the first and second sliding surfaces, as the seal and the first wedge are compressed, to engage the internal surface of the flow path.

2. The apparatus of claim 1, wherein the end cap comprises an opening in the neck that is configured to receive the first end of the actuator, and wherein the head of the end cap is closed.

3. The apparatus of claim 1, wherein the end cap comprises a cylindrical outer surface.

4. The apparatus of claim 1, wherein the outer surface of the end cap includes a recess configured to resist rotation of the end cap.

5. The apparatus of claim 1, wherein the head of the end cap is configured to couple with a tool inserted through an intersecting path that laterally intersects the flow path to resist rotation of the end cap.

6. The apparatus of claim 1, wherein the end cap comprises a non-cylindrical outer surface configured to resist rotation within the flow path by engaging the internal surface of the flow path.

7. The apparatus of claim 1, wherein the first wedge comprises a non-cylindrical outer surface, a non-cylindrical inner surface, and a wall therebetween.

8. The apparatus of claim 7, wherein at least a portion of the neck of the end cap is configured to slideably couple with the inner surface of the first wedge.

9. The apparatus of claim 7, wherein the wall has a constant thickness.

10. The apparatus of claim 1, wherein the first angle and the second angle are each from 50 degrees to 80 degrees.

11. The apparatus of claim 1, wherein the second wedge includes a thru hole parallel to the longitudinal axis of the apparatus, and wherein the thru hole has an oblong cross-sectional shape.

12. The apparatus of claim 1, wherein the second wedge comprises a non-cylindrical outer surface.

13. The apparatus of claim 1, wherein the first end of the actuator is threadably coupled to the end cap.

14. The apparatus of claim 1, wherein each of the first wedge, the second wedge and the seal is of a non-cylindrical cross-sectional shape in a direction perpendicular to the longitudinal axis of the apparatus.

15. The apparatus of claim 1, wherein the seal is disposed longitudinally between a shoulder of the end cap and a bottom surface of the first wedge.

16. The apparatus of claim 1, wherein at least one of the first and second wedges comprises a smooth outer surface configured to engage the internal surface of the flow path.

17. The apparatus of claim 1, wherein the neck of the end cap comprises a boss configured to align the first wedge relative to the end cap.

18. The apparatus of claim 1, wherein the actuator comprises a head configured to force the second wedge towards the end cap.

19. The apparatus of claim 1, wherein the seal is configured to deform radially outwardly to sealingly engage the internal surface of the flow path, and wherein the first and second wedges are configured to engage the internal surface of the flow path laterally to longitudinally fix the apparatus in place relative to the flow path.

20. The apparatus of claim 1, wherein the first wedge is tubular, wherein the second wedge has an irregular thru hole there through, and wherein the second wedge has a top surface configured to couple with the actuator.
